# EUROPEAN PATENT SPECIFICATION

(11) **EP 2 354 802 B1**
(45) Date of publication and mention of the grant of the patent: **29.05.2013**
(21) Application number: 10001162.6
(22) Date of filing: 04.02.2010
(51) Int. Cl.: G01S 19/23, G01S 19/29

(54) **Method for self-calibration of frequency offsets**
Verfahren zur Selbstkalibrierung von Frequenzversätzen
Procédé d'auto-étalonnage des décalages de fréquence

(43) Date of publication of application: 10.08.2011
(73) Proprietor: Astrium GmbH, 82024 Taufkirchen (DE)
(72) Inventor: Wendel, Jan Dr., 80336 München (DE)
(74) Representative: Häußler, Henrik

(56) References cited:
- EP-A1- 2 120 061
- WO-A1-2009/140768
- US-A1- 2002 005 802
- US-A1- 2008 158 050
- US-A1- 2009 153 398
- US-A1- 2009 262 018

## Description

### TECHNICAL FIELD

The present invention is directed to a method for self-calibration of frequency offsets in a measurement equipment of an interference monitoring system. It is further directed to a self-calibrating device and an interference monitoring system.

Radio frequency interference (RFI) presents a serious threat for radio navigation systems and their augmentation systems like GPS, Galileo, EGNOS, WAAS, etc. Therefore, a continuous monitoring of the RFI environment is necessary to protect these systems and to generate situational awareness regarding possible system performance degradations caused by RFI.

EP 2 120 061 A1 is directed to an improved frequency aiding method and system for navigation satellite receiver with crystal oscillator frequency hysteresis. The problem to be solved by said invention is the compensation of the frequency variation as a response to a temperature change. It is a precondition in this known method that the satellite receiver is working correctly and having contact to a satellite so that it is in operational mode during which the actual frequency of the clock signal that corresponds to that of the satellite is known. This known frequency is stored in a memory as a part of compensation tables. When a temperature change occurs resulting in a frequency offset which leaves the boundaries of the hysteresis loop the compensation table is updated. The compensation table consists of a two column table of data entries, one corresponding to an index temperature value and the other corresponding to a corresponding frequency offset value. The system disclosed in this prior art can also be self-learning wherein the receiver is able to determine the frequency variation in the oscillator signal as a function of temperature. As the system is provided with a temperature sensor it is possible to correct the frequency value by using the measured temperature value and the frequency variation stored in the compensation table for the respective temperature.

US 2002/0005802 A1 discloses a method, device and system for determining a receiver location using weak signal satellite transmissions. In this known method current almanac data are used to estimate Doppler frequencies of the satellites by the receiver for given approximate locations of the satellites, however, it is necessary that the frequency offset of the reference oscillator of the receiver is known within a few hertz.

A method and apparatus for calibrating a global positioning system oscillator are disclosed in US 2009/0153398 A1. A calibration signal is generated and is sent to the receiver. This calibration signal is obtained by using frequency offset values stored in a table as a function of the oscillator temperature.

WO 2009/140768 A1 discloses a GNSS receiver which reduces the time to first fix by utilizing the properties of existing radiated signals of opportunity, such as AM or FM radio signals, television signals and so forth, to reduce the uncertainties associated with oscillator frequency and phase. It further utilizes an almanac and battery backed-up date and time to determine the satellites in view and reduce the uncertainties associated with Doppler. The receiver uses these multiple signals of opportunity to determine the local area in which it is located. This known receiver reduces search uncertainties for oscillator frequency by estimating an offset based on the differences between the frequencies of the respective signals of opportunity and the receiver and the nominal broadcast frequencies of these signals.

US 2009/0262018 A1 is directed to a high accuracy satellite signal receiving controller in which an oscillation frequency adjustment value is generated for a GPS receiving module by using an external non-temperature-compensated crystal oscillator by estimating the oscillation frequency adjustment value according to a measured temperature and known temperature/frequency offset data.

US 2008/0158050 A1 discloses a GPS receiver with frequency offset compensation. This compensation is carried out by using predetermined frequency offsets which may be stored in a table.

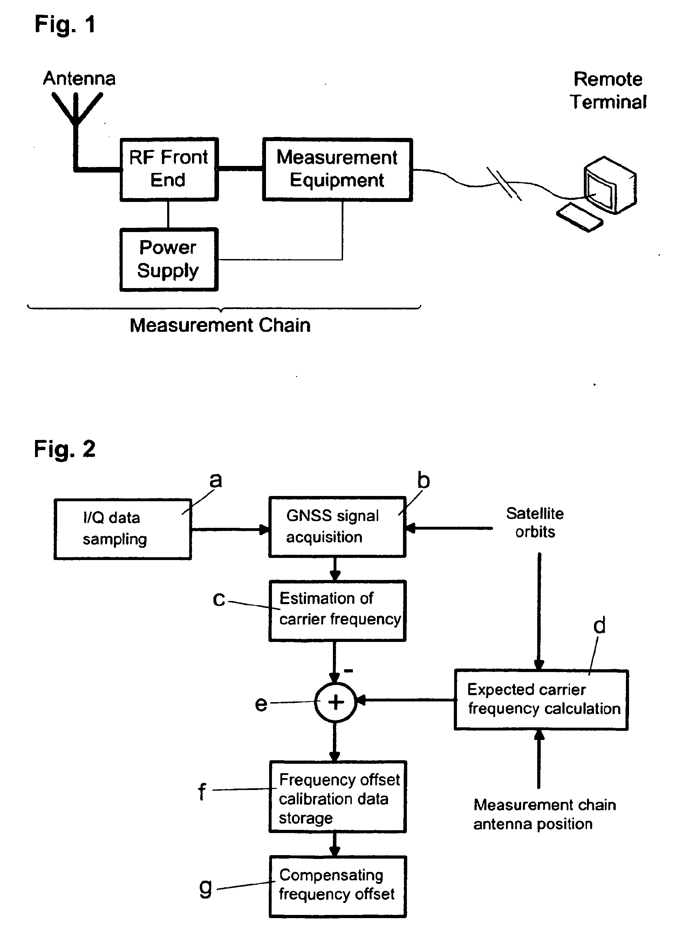

A conventional measurement chain applied in a sensing site of an interference monitoring system is shown in Fig. 1. This known measurement chain includes one or more antennas, a radio frequency (RF) front end and measurement equipment like signal analyzers and/or a combination of downconverters, analogue/digital (A/D) converters and samplers. Usually, this equipment is operated from remote in order to avoid frequent site visits.

The measurement equipment makes use of an external or internal reference frequency source, e.g. a quartz oscillator. Such a quartz oscillator is susceptible to aging, so that the reference frequency provided by this device drifts away from its nominal value with time. This causes frequency offsets in the measurements provided by the measurement equipment. Therefore, this measurement equipment needs to be calibrated at regular intervals. It is therefore desired, to have such a measurement equipment equipped with a self-calibration capability in order to avoid site visits for calibration purposes.

A calibration of measurement equipment like signal analyzers is usually performed by the equipment manufacturer. In the context of interference monitoring this requires that either the equipment is shipped to the manufacturer for calibration, or that qualified personnel calibrates the equipment on site. Both approaches have drawbacks regarding interference monitoring system downtimes and costs.

### OBJECT OF THE INVENTION

It is therefore an object of the present invention to provide a method for self-calibration of frequency offsets of signals coming from a GNSS satellite in a measurement equipment of an interference monitoring system. It is further an object of the invention to provide a self-calibrating device employing such a method and an interference monitoring system with such a self-calibrating device.

The object directed to the method is achieved by the method with the features of claim 1.

This inventive method comprises the steps of:
a) sampling I/Q data in a GNSS frequency band by using the interference monitoring system measurement equipment;
b) acquiring one or more GNSS navigation signal(s) from said I/Q data,
c) said acquisition of step b) providing an estimate of at least one satellite signal's carrier frequency of said satellite;
d) calculating the visibility of said satellite from ephemeris or almanac data and determining the expected frequency of said satellite signal's carrier from said satellite's orbit data and the known measurement antenna position;
e) comparing the expected satellite signal's carrier frequency with the estimated satellite signal's carrier frequency and calculating a frequency offset value as the difference between said two frequencies;
f) storing said frequency offset value in a memory; and
g) using said stored frequency offset value to compensate the frequency offset of at least one measurement in the future.

Thus, the invention consists of a method which allows for a self-calibration of frequency offsets in the measurement equipment of an interference monitoring system.

### ADVANTAGES

The self-calibration method according to the invention consists of sampling I/Q data using the interference monitoring system measurement equipment, to acquire signals from navigation satellites contained in this I/Q data, and to compare the estimated carrier frequencies of the navigation satellite signals with the corresponding expected carrier frequencies, which are calculated from satellite orbit data and the measurement equipment antenna position. The difference between estimated and expected carrier frequency equals the frequency offset of the measurement equipment at the expected carrier frequency, and allows to compensate the frequency offset of each future measurement.

Preferred embodiments of the inventive method are claimed in subclaims 2 to 8.

In an advantageous modification of the inventive method the acquisition of navigation signals in step b) is carried out by correlating the sampled I/Q data with appropriate replica signals of different code phases and carrier frequencies.

Another advantageous further embodiment of the inventive method is characterized in that in the step of estimating the satellite signal's carrier frequency the satellite visibility is calculated from known ephemeris or almanac data.

It is also preferred that the expected satellite signal's carrier frequency is calculated from the position of the antenna of the measurement equipment, the satellite position and the satellite velocity.

In a further advantageous development of the inventive method the acquisition of the navigation signals from said I/Q data in step b) is carried out in two sub-steps:
b1) carrying out a coarse acquisition sub-step first and
b2) carrying out a refinement acquisition sub-step thereafter.

Preferably, an acquisition technique is applied in said refinement acquisition sub-step with narrow frequency bins.

Alternatively, the I/Q data sampled in step a) are processed in said refinement acquisition sub-step in a tracking loop implementation initialized from the results of the coarse acquisition in sub-step b1).

It is advantageous to calculate the frequency offset value at more than one frequencies of interest.

The invention is also directed to a self-calibrating device which is adapted to carry out the steps according to one of claims 1 to 8.

Furthermore, the invention is directed to an interference monitoring system comprising a measurement equipment provided with a self-calibrating device according to claim 9.

### DESCRIPTION OF THE DRAWINGS

Preferred embodiments of the present invention will now be described with reference to the drawings, in which:
- Fig. 1: illustrates a conventional measurement chain applied in a sensing site of an interference monitoring system; and
- Fig. 2: illustrates a schematic visualisation of the method according to the present invention.

### DETAILED DESCRIPTION OF PREFERRED EMBODIMENTS

The measurement chain shown in Fig. 1 is, in principle, the same as in the interference monitoring system of the present invention. However, in order to implement the invention it is required that the RF front end of the measurement chain contains appropriate bandpass filters and low noise amplifiers, so that this RF front end could also be used as a front end for a global navigation satellite signal (GNSS) receiver. The measurement chain antenna position has to be known, and current GNSS almanac or ephemeris data must be available, e.g. from the internet. The pseudo random noise codes (PRN codes) of GNSS signals are also required.

A method for self-calibration of frequency offsets in the measurements provided by the measurement equipment works as follows (Fig. 2):
The first step (a) is to use the measurement equipment to sample I/Q data in a GNSS band, e.g. the L1-band. This I/Q data can be provided in baseband or on an intermediate frequency. The sample size and bandwidth must be large enough to allow for an acquisition of the GNSS signals contained in the selected band.
The second step (b) is to acquire one or more GNSS signals. In principle, this is done by correlating the I/Q samples with appropriate replica signals of different code phases and carrier frequencies. The highest correlation peak indicates the best agreement between the satellite signal and the respective replica signal, which reveals the satellite signal's code phase and carrier frequency. Basically, any common acquisition technique — sequential search, parallel code phase search, parallel frequency search to name a few — can be used that provides in a third step (c) an estimate of the satellite signal's carrier frequency. The satellite visibility is calculated from ephemeris or almanac data.

It is advantageous but not required to perform a coarse acquisition (sub-step b1) first, and then to refine the carrier frequency estimate (sub-step b2). This refinement can be achieved by applying again an acquisition technique but with narrowed frequency bins, or by processing the I/Q data in a tracking loop implementation initialized from the results of the coarse acquisition. The outcome of the third step (c) is an estimate of the carrier frequency of one or more GNSS signals received by the measurement equipment.

The expected GNSS signal carrier frequency is calculated in a fourth step (d) from the measurement chain antenna position, the satellite position and the satellite velocity.

In a fifth step (e), the expected satellite signal carrier frequency is compared with the estimate of the carrier frequency from the third step.

The difference between the expected and the estimated carrier frequency equals the frequency offset of the measurement equipment at the expected carrier frequency. With the knowledge of the measurement equipment's oscillator frequency — or by using signals from two or more GNSS bands — the frequency offset of the measurements provided by the measurement equipment can be calculated at any frequency of interest.

In a sixth step (f), the frequency offset obtained in the fifth step (e) is stored.

Step seven (g) completes the self-calibration procedure and allows to compensate the frequency offset of each future measurement.

The invention consists of a method that allows for a self-calibration of the frequency offsets of an interference monitoring system measurement equipment. The following advantages can be identified:
- The self-calibration capability provided by this method avoids frequent site visits for calibration purposes, which reduces the system's downtime and is cost-efficient.
- No additional dedicated hardware is required to implement this self-calibration capability.

## Claims

1. A method for self-calibration of frequency offsets of signals coming from a GNSS satellite in a measurement equipment of an interference monitoring system wherein said measurement equipment has a measurement antenna of a known position, the method comprising the steps of:
a) sampling I/Q data in a GNSS frequency band by using the interference monitoring system measurement equipment;
b) acquiring one or more GNSS navigation signal(s) from said I/Q data,
c) said acquiring of the previous step providing an estimate of at least one satellite signal's carrier frequency of said satellite;
d) calculating the visibility of said satellite from ephemeris or almanac data and determining the expected frequency of said satellite signal's carrier from said satellite's orbit data and the known measurement antenna position;
e) comparing the expected satellite signal's carrier frequency with the estimated satellite signal's carrier frequency and calculating a frequency offset value as the difference between said two frequencies;
f) storing said frequency offset value in a memory; and
g) using said stored frequency offset value to compensate the frequency offset of at least one measurement in the future.

2. The method according to claim 1,
wherein the acquisition of navigation signals in step b) is carried out by correlating the sampled I/Q data with appropriate replica signals of different code phases and carrier frequencies.

3. The method according to claim 1 or 2,
wherein in the step of estimating the satellite signal's carrier frequency the satellite visibility is used which is calculated from known ephemeris or almanac data.

4. The method according to one of claims 1 to 3,
wherein the expected satellite signal's carrier frequency is determined from the known position of the antenna of the measurement equipment, the satellite position and the satellite velocity.

5. The method according to one of claims 1 to 4,
wherein the acquisition of the navigation signals from said I/Q data is carried out in two sub-steps:
b1) carrying out a coarse acquisition sub-step first and
b2) carrying out a refinement acquisition sub-step thereafter.

6. The method according to claim 5,
wherein in said refinement acquisition sub-step an acquisition technique is applied with narrow frequency bins.

7. The method according to claim 5,
wherein in said refinement acquisition sub-step the I/Q data sampled in step a) are processed in a tracking loop implementation initialized from the results of the coarse acquisition in sub-step b1).

8. The method according to one of the preceding claims,
wherein the frequency offset value is calculated at more than one frequencies of interest.

9. Self-calibration device for calibrating frequency offsets of signals coming from a GNSS satellite in a measurement equipment of an interference monitoring system, wherein said measurement equipement has a measurement antenna of a known position,
**characterized in that,**
the device comprises means for carrying out the steps according to one of claims 1 to 8.

10. Interference monitoring system comprising a measurement equipment provided with a self-calibrating device according to claim 9.

## Patentansprüche

1. Verfahren zur Selbstkalibrierung von Frequenzoffsets von Signalen, die von einem GNSS-Satelliten ausgehen, in einem Messgerät eines Störungsüberwachungssystems, wobei das Messgerät eine Messantenne einer bekannten Position aufweist, wobei das Verfahren die folgenden Schritte umfasst:
a) Abtasten von I/Q-Daten in einem GNSS-Frequenzband durch Verwendung des Störungsüberwachungssystem-Messgeräts;
b) Erfassen eines oder mehrerer GNSS-Navigationssignale aus den I/Q-Daten;
c) wobei das Erfassen des vorherigen Schritts eine Schätzung einer Trägerfrequenz mindestens eines Satellitensignals des Satelliten bereitstellt;
d) Berechnen der Sichtbarkeit des Satelliten aus Ephemeriden- oder Almanachdaten und Ermitteln der erwarteten Frequenz des Trägers des Satellitensignals aus den Orbitdaten des Satelliten und der bekannten Messantennenposition;
e) Vergleichen der erwarteten Trägerfrequenz des Satellitensignals mit der geschätzten Trägerfrequenz des Satellitensignals und Berechnen eines Frequenzoffsetwerts als Differenz zwischen den zwei Frequenzen;
f) Speichern des Frequenzoffsetwerts in einem Speicher; und
g) Verwenden des abgelegten Frequenzoffsetwerts, um das Frequenzoffset mindestens einer Messung in zukunft zu kompensieren.

2. Verfahren nach Anspruch 1,
wobei die Erfassung von Navigationssignalen im Schritt b) durch Korrelieren der abgetasteten I/Q-Daten mit entsprechenden Duplikatsignalen unterschiedlicher Codephasen und Trägerfrequenzen ausgeführt wird.

3. Verfahren nach Anspruch 1 oder 2,
wobei beim Schritt des Schätzens der Trägerfrequenz des Satellitensignals die Satellitensichtbarkeit verwendet wird, die aus bekannten Ephemeriden- oder Almanachdaten berechnet wird.

4. Verfahren nach einem der Ansprüche 1 bis 3,
wobei die erwartete Trägerfrequenz des Satellitensignals aus der bekannten Position der Antenne des Messgeräts, der Satellitenposition und der Satellitengeschwindigkeit ermittelt wird.

5. Verfahren nach einem der Ansprüche 1 bis 4, wobei die Erfassung der Navigationssignale aus den I/Q-Daten in zwei Teilschritten ausgeführt wird:
b1) zuerst Ausführen eines Groberfassungs-Teilschritts und
b2) danach Ausführen eines Verfeinerungserfassungs-Teilschritts.

6. Verfahren nach Anspruch 5,
wobei bei dem Verfeinerungserfassungs-Teilschritt eine Erfassungstechnik mit schmalen Frequenzbins angewendet wird.

7. Verfahren nach Anspruch 5,
wobei bei dem Verfeinerungserfassungs-Teilschritt die im Schritt a) abgetasteten I/Q-Daten in einer Nachlaufschleifenimplementierung verarbeitet werden, die aus den Ergebnissen der Groberfassung bei Teilschritt b1) initialisiert wird.

8. Verfahren nach einem der vorhergehenden Ansprüche, wobei der Frequenzoffsetwert bei mehr als einer interessierenden Frequenz berechnet wird.

9. Selbstkalibriervorrichtung zum Kalibrieren von Frequenzoffsets von Signalen, die von einem GNSS-Satelliten ausgehen, in einem Messgerät eines Störungsüberwachungssystems, wobei das Messgerät eine Messantenne einer bekannten Position aufweist,
**dadurch gekennzeichnet, dass**
die Vorrichtung Mittel zum Ausführen der Schritte nach einem der Ansprüche 1 bis 8 umfasst.

10. Störungsüberwachungssystem, das ein Messgerät umfasst, das mit einer Selbstkalibriervorrichtung nach Anspruch 9 ausgestattet ist.

## Revendications

1. Procédé d'auto-étalonnage de décalages de fréquence de signaux provenant d'un satellite GNSS dans un équipement de mesure d'un système de contrôle d'interférences où ledit équipement de mesure a une antenne de mesure de position connue, le procédé comprenant les étapes suivantes :
a) échantillonner des données I/Q dans une bande de fréquence GNSS en utilisant l'équipement de mesure du système de contrôle d'interférences ;
b) acquérir un ou plusieurs signaux de navigation GNSS à partir desdites données I/Q ;
c) ladite acquisition de l'étape précédente fournissant une estimation d'au moins une fréquence porteuse de signal satellite dudit satellite ;
d) calculer la visibilité dudit satellite à partir de données d'éphéméride ou d'almanach et déterminer la fréquence attendue de ladite porteuse de signal satellite à partir desdites données d'orbite du satellite et de la position d'antenne de mesure connue ;
e) comparer la fréquence de porteuse du signal satellite attendue à la fréquence de porteuse du signal de satellite estimée, et calculer une valeur de décalage de fréquence comme étant la différence entre lesdites deux fréquences ;
f) stocker ladite valeur de décalage de fréquence en mémoire ; et
g) utiliser ladite valeur de décalage de fréquence stockée pour compenser, dans le futur, le décalage de fréquence d'au moins une mesure.

2. Procédé selon la revendication 1,
dans lequel l'acquisition de signaux de navigation à l'étape b) est exécutée en corrélant les données I/Q échantillonnées avec des signaux de réplique appropriés de différentes phases de code et fréquences porteuses.

3. Procédé selon la revendication 1 ou la revendication 2,
dans lequel, dans l'étape comprenant d'estimer la fréquence porteuse du signal satellite, la visibilité du satellite est utilisée, laquelle est calculée à partir de données d'éphéméride ou d'almanach connues.

4. Procédé selon l'une des revendications 1 à 3,
dans lequel la fréquence de porteuse du signal de satellite attendue est déterminée à partir de la position connue de l'antenne de l'équipement de mesure, de la position du satellite et de la vitesse du satellite.

5. Procédé selon l'une des revendications 1 à 4,
dans lequel l'acquisition des signaux de navigation à partir desdites données I/Q est exécutée en deux sous-étapes :
b1) procéder, en premier lieu, à une sous-étape d'acquisition grossière, et
b2) procéder, par la suite, à une sous-étape d'acquisition d'affinement.

6. Procédé selon la revendication 5,
dans lequel, dans ladite sous-étape d'acquisition d'affinement, une technique d'acquisition est appliquée avec des groupes de fréquences étroits.

7. Procédé selon la revendication 5,
dans lequel, dans ladite sous-étape d'acquisition d'affinement, les données I/Q échantillonnées à l'étape a) sont traitées dans une implémentation à boucle de suivi initialisée à partir des résultats de l'acquisition grossière de la sous-étape b1).

8. Procédé selon l'une des revendications précédentes,
dans lequel la valeur de décalage de fréquence est calculée à plus d'une fréquence d'intérêt.

9. Dispositif d'auto-étalonnage pour étalonner des décalages de fréquence de signaux provenant d'un satellite GNSS dans un équipement de mesure d'un système de contrôle d'interférences, où ledit équipement de mesure a une antenne de mesure ayant une position connue,
**caractérisé en ce que**
le dispositif comprend un moyen pour exécuter les étapes selon une des revendications 1 à 8.

10. Système de contrôle d'interférences comprenant un équipement de mesure pourvu d'un dispositif d'auto-étalonnage selon la revendication 9.
